(19) Europäisches Patentamt
European Patent Office
Office européen des brevets

(11) **EP 1 355 181 B1**

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(51) Int Cl.:
***G02B 21/00*** *(2006.01)*

(21) Anmeldenummer: **03006414.1**

(22) Anmeldetag: **21.03.2003**

(54) **Laser-scanning-Mikroskop mit Kollimator- und/oder Pinholeoptik**

Laser scanning microscope with collimator and/or pinholeoptic

Microscope de balayage à laser avec un collimateur et/ou un trou d'épingle

(84) Benannte Vertragsstaaten:
**AT BE BG CH CY CZ DE DK EE ES FI FR GB GR HU IE IT LI LU MC NL PT RO SE SI SK TR**

(30) Priorität: **17.04.2002 DE 10217544**

(43) Veröffentlichungstag der Anmeldung:
**22.10.2003 Patentblatt 2003/43**

(73) Patentinhaber: **Carl Zeiss MicroImaging GmbH**
**07745 Jena (DE)**

(72) Erfinder:
• **Winterot, Johannes**
**07745 Jena (DE)**
• **Goelles, Michael**
**07745 Jena (DE)**

(74) Vertreter: **Hampe, Holger et al**
**Carl Zeiss Jena GmbH**
**Carl-Zeiss-Promendade 10**
**07745 Jena (DE)**

(56) Entgegenhaltungen:
**EP-A- 0 467 240        DE-A- 4 128 506**
**DE-A- 19 702 753      DE-A- 19 951 482**
**US-A- 5 646 411        US-A- 5 864 436**

**Beschreibung**

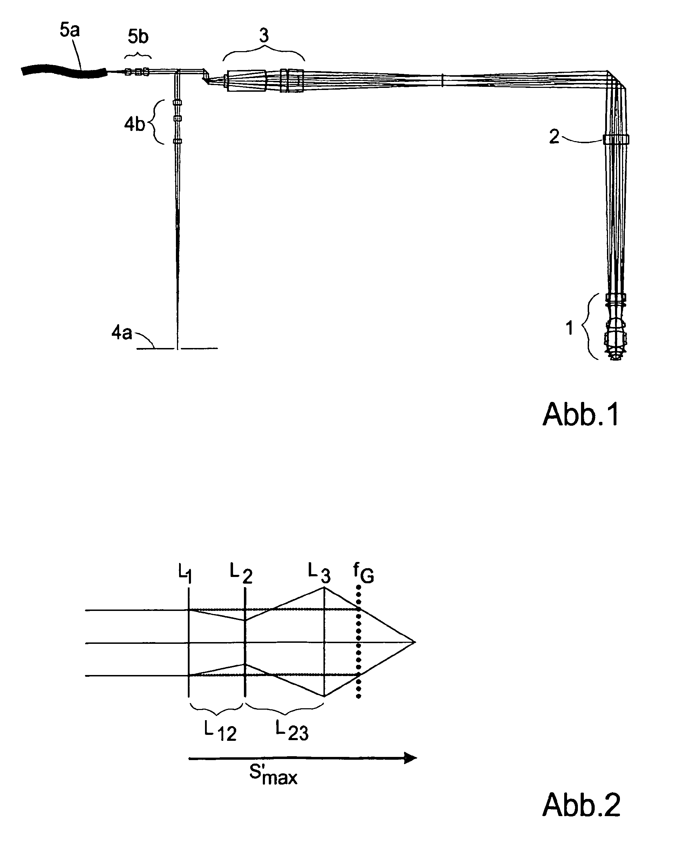

Ein modernes Werkzeug zur Beobachtung kleiner Strukturen stellt das Laser-Scanning-Mikroskop (LSM) dar [1]. Wie beim klassischen Mikroskop wird das Objekt über Objektiv und Tubuslinse zunächst in die Zwischenbildebene abgebildet. In einer zweiten Abbildungsstufe des LSM wird das konfokale Prinzip anregungs- und detektionsseitig realisiert. Anregungsseitig erfolgt die Einkopplung mit einem punktförmigen Faserausgang über einen Kollimator [2] oder direkt in den Unendlichraum vor dem Scan-Objektiv, das in die Zwischenbildebene der klassischen Mikroskopanordnung fokussiert wird. Zur Detektion wird die aus dem Objekt stammende spektral verschobene Fluoreszenzstrahlung verwendet, die nach der Zwischenbildebene über Scan-Objektiv und Pinhole-Optik auf ein Pinhole zur Detektion fällt. Anregungs- und Detektionskanäle werden durch Farbteiler getrennt. Mit Hilfe von Scan-Spiegeln, die im Unendlichraum zwischem Scan-Objektiv und Kollimator-/Pinhole-Optik in der Nähe des Bildes der Objektivpupille angeordnet sind, läßt sich jeder Bildfeldpunkt ausleuchten und detektieren. Das Bild wird dann elektronisch aus dem Detektorsignal und der Information über die Scannerstellungen zusammengesetzt. Die Strahlformung erfolgt in der Objektivpupille (Abb. 1).

Aufgrund dessen, daß bis zum Zwischenbild häufig eine Optik benutzt wird, die den VIS-Anforderungen der klassischen Lichtmikroskopie entspricht, treten für die neu zu erschließenden Spektralbereiche (UV,IR) in Abhängigkeit von der Korrektion von Objektiv und Tubuslinse Fokusdifferenzen auf. Systematisch auftretende Anteile können im Scan-Objektiv kompensiert werden. Gegenwärtig werden darüber hinaus gehende Farbfehler durch spektrales Aufspalten der Einkoppel- und Pinhole-Optik in Kanäle unterschiedlicher optischer Weglänge abgeglichen. Doch selbst innerhalb eines Kanals treten oft erhebliche mechanische Stellwege auf. Verursacht wird dies durch die meist starke Wellenlängenabhängigkeit des Farblängsfehlers im UV- und IR-Bereich. Andererseits zeigen Systeme mit hohem lateralem Abbildungsmaßstab (-100) ein empfindliches Verhalten in Bezug auf die Transformation axialer Positionsänderungen vom Objekt in den Bildraum.

Einen Ausweg bietet das Verschieben der gesamten, zur Pinhole-Ebene konjugiert stehenden Kollimatorgruppe, die bis zu einem gewissen Grad einen hinreichend großen Vorspann für die Defokussierung liefern kann [2]. Sie unterscheidet sich von Lösungen, die darauf abzielen den Beleuchtungsdurchmesser durch eine Variooptik zu variieren [3].

Literatur:

[1] Wilson, Confocal Microscopy, Academy Press
[2] Offenlegungsschrift DE 19702753 A1
[3] DE 19654211 A1,
DE 19901219 A1

In der DE 19702753 A1 wird ein konfokales Laser-Scanning-Mikroskop beschrieben, welches eine variable Kollimationsoptik aufweist, die der Kollimation der am Faserende divergent austretenden Strahlung dient. Unterschiedliche Farben bzw. Wellenlängen haben jedoch unterschiedliche Fokusebenen.

Ausgehend von diesem Stand der Technik besteht die Aufgabe darin, eine Optik zu entwickeln, mit der mehrere Wellenlängen in dieselbe Ebene abgebildet werden, wobei die Brennweite konstant bleiben soll.

Im folgenden wird eine Optik mit variabler Übertragungslänge und fester Brennweite beschrieben, die eine Abbildung aus dem Unendlichraum in eine Bildebene mit endlicher Schnittweite realisiert. Sie kann als Pinhole- oder Kollimator-Optik beim Nachfokussieren unterschiedlicher Wellenlängen bei festem Abbildungsmaßstab eingesetzt werden.

Diese Optik realisiert eine Abbildung aus dem "Unendlichraum" in die Bildebene und erfüllt die Bedingungen:

1. feste Brennweite $f_G$,
2. große Variation der Schnittweite bei geringen Stellwegen und
3. geometrisch optische sowie chromatische Korrektion zur Sicherung einer großen spektralen Bandbreite für die in der jeweiligen Anwendung erforderlichen Bündeldurchmesser und Wellenlängen

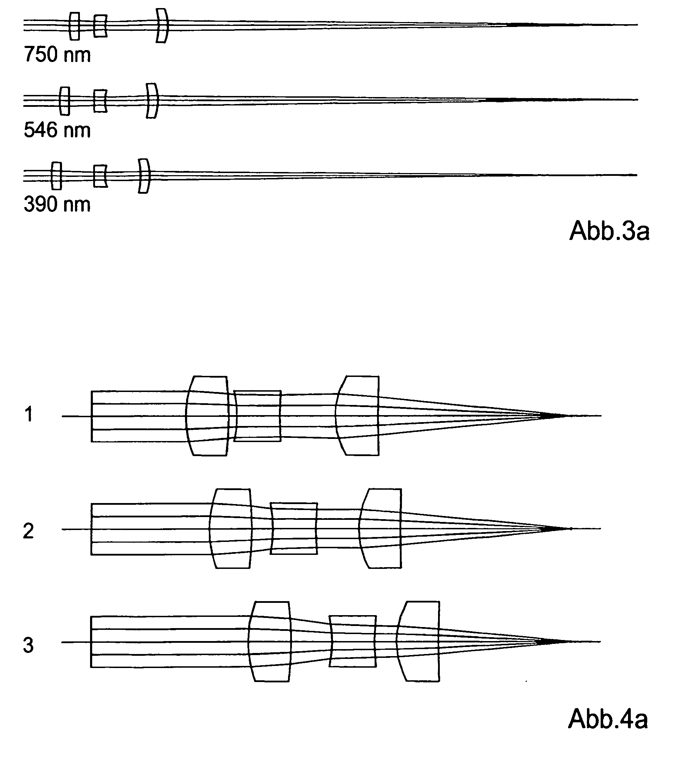

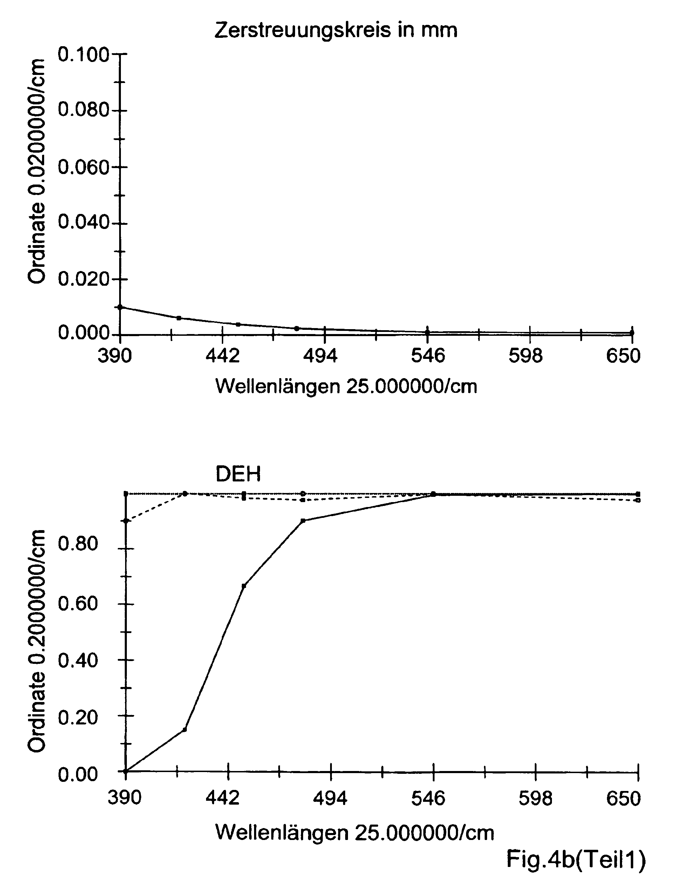

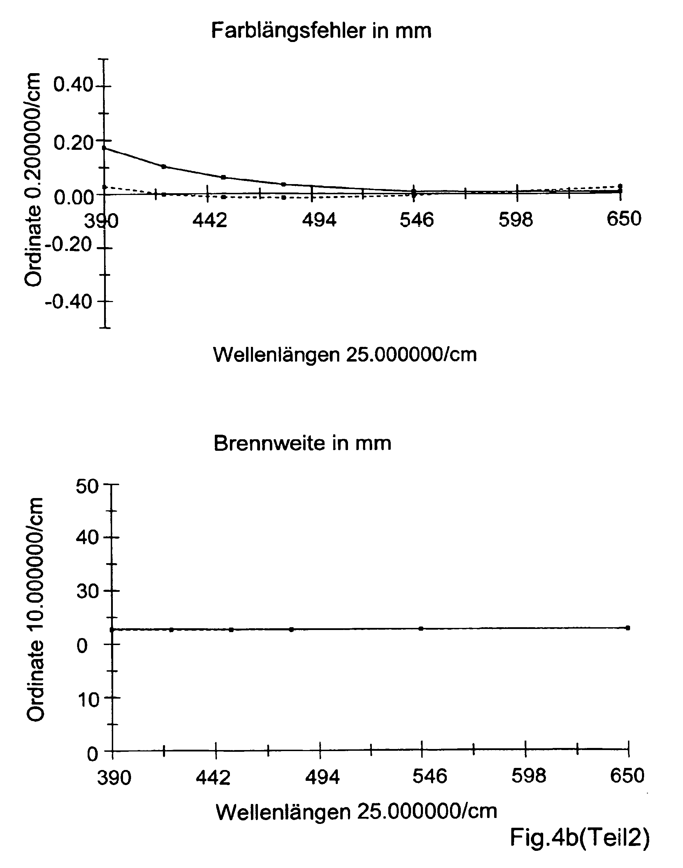

Vorgeschlagen wird eine Lösung, bestehend aus mindestens drei Gruppen, von denen die - im Detektionsstrahlengang in Richtung der Lochblende gesehen - erste Gruppe eine positive Brechkraft, die zweite Gruppe eine negative Brechkraft und die dritte Gruppe eine positive Brechkraft aufweist (Abb.2,4). Die Lösung ist dadurch charakterisiert, daß zur Änderung der Übertragungslänge die erste und dritte Gruppe gemeinsam fest verbunden bewegt werden und die zweite Gruppe feststeht.

Diese Bewegung kompensiert die wellenlängenabhängige Lage der Bildschnittweite durch die Bewegung optischer Glieder so, daß über den zu wählenden Spektralbereich alle Wellenlängen auf eine Ebene abgebildet werden können. Eine große Variation der Bildschnittweite korrespondiert mit einem großen fokussierbaren Spektralbereich in der Bildebene. Die Lösung erlaubt sowohl das Festhalten einer Brennweite als auch eine große Variation der Übertragungslänge. In paraxialer Näherung läßt sich die erreichbare Schnittweitenänderung $\Delta S'_{max}$ bei etwa gleichen Brennweiten der Gruppen 1 und 3 durch die Beziehung

$$\Delta S'_{max} = \left| \frac{f_G L}{f_2} \right|$$

abschätzen, wobei $f_G$ die Gesamtbrennweite der Optik der Baulänge $L = L_{12} + L_{23}$ und $f_2$ die Brennweite der zweiten Gruppe darstellen. $L_{12}$ ist der Abstand zwischen erster und zweiter Gruppe, $L_{23}$ der Abstand zwischen zweiter und dritter Gruppe.

**Ausführungsbeispiel für Brennweite f'=160 (Pinhole-Optik)**

Mit der Ausführung f'=160 soll eine fokussierbare Pinhole-Optik mit konstanter Brennweite und Pinhole-Lage bei geringen mechanischen Stellbewegungen realisiert werden. Ziel ist pro Detektionsstrahlengang die Fokussierung für den interessierenden Wellenlängenbereich optimal einzustellen und diesen Bereich gegenüber LSM5, einem Laser-Scanning-Mikroskop der Firma Carl Zeiss, zu erweitern.
Als Ausführungsbeispiel wählen wir:
Nachstehend wird die laufende Nr. definiert:
1. : erste Linsenfläche L1
2. : zweite Linsenfläche L1
3. : erste Linsenfläche L2
4. : zweite Linsenfläche L2
5. : erste Linsenfläche L3:
6. : zweite Linsenfläche L3
7. : Pinhole

| lfdNr | Distanz [mm] | Radius[mm] | Glasart | f'Linse | $n_e$ | $v_\varepsilon$ | $\phi$ |
|---|---|---|---|---|---|---|---|
| 1 | Unendlich | 29,0 | N-FK5-L1 | 59,3 | 1,48914 | 70,18 | 9,0 |
| 2 | 3,0 | Unendlich | | | | | |
| 3 | 10,7 | 43,4 | LF5-L2 | -30,4 | 1,58482 | 40,56 | 7,0 |
| 4 | 3,5 | 12,2 | | | | | |
| 5 | 11,0 | -25,3 | N-SK2-L3 | 62,1 | 1,60994 | 56,37 | 11,0 |
| 6 | 3,0 | -15,8 | | | | | |
| 7 | 153,3 | Unendlich | | | | | |

Beispiel für Bewegung:

Die Bedingung der Einstellung gemäß vorhandenem Farblängsfehler wird weiter unten dargestellt.
Zur Kompensation des Farblängsfehlers der Objektive lassen sich folgende Stellwege durch das gemeinsame Verschieben der Vorder- und Hinterlinse gegenüber der feststehenden Mittellinse realisieren.

| | Distanz3 | [mm] | Distanz5 | [mm] | Distanz7 | [mm] |
|---|---|---|---|---|---|---|
| 1. | 8,3 | | 13,4 | | 150,9 | |
| 2. | 10,7 | | 11,0 | | 153,3 | |
| 3. | 9,1 | | 12,6 | | 151,7 | |

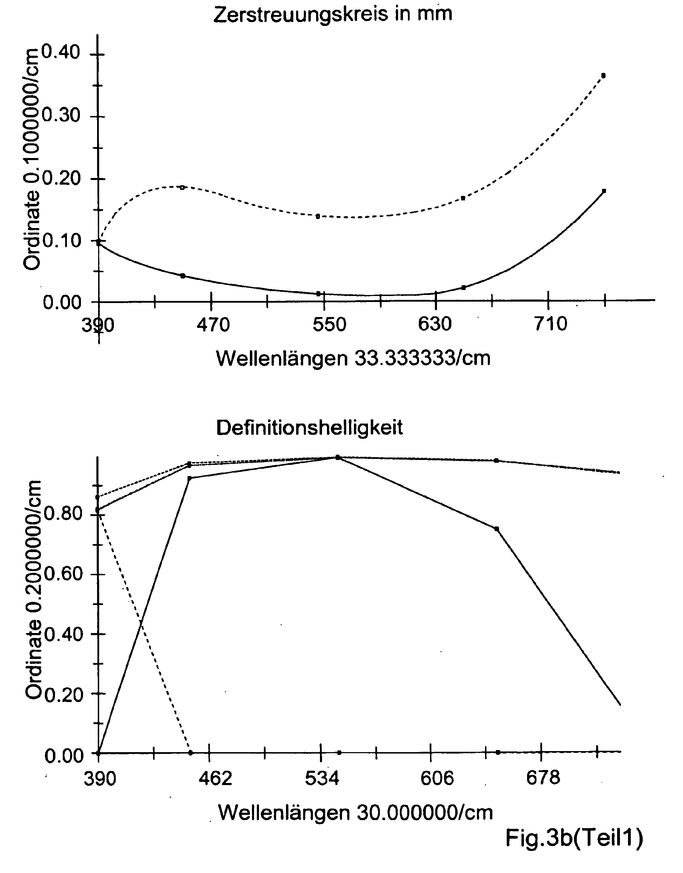

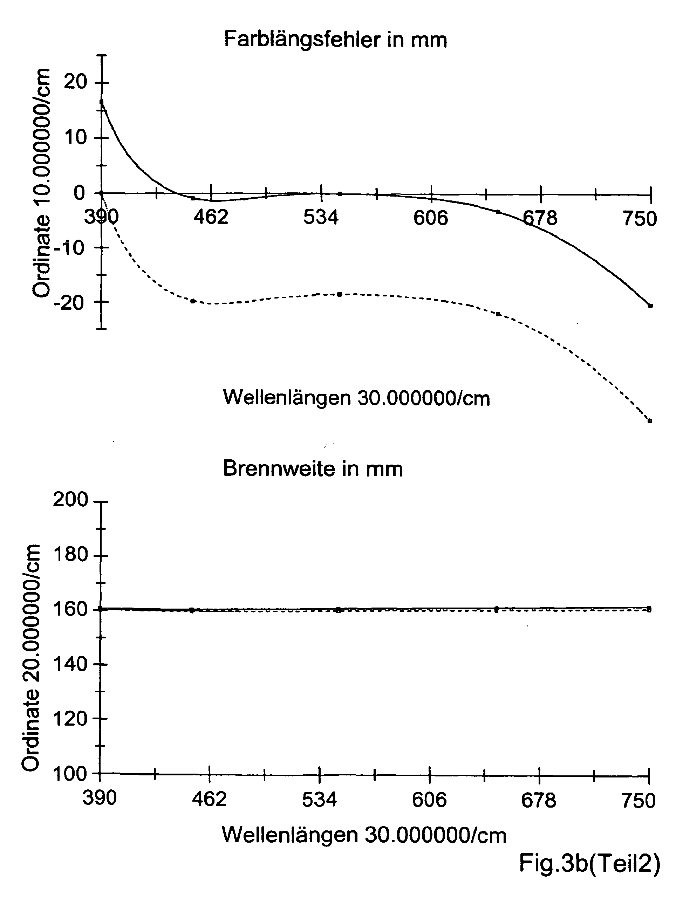

Die zugehörige Dynamik zur Nachfokussierung veranschaulicht Abb. 3a. In Abb. 3b werden zur Bewertung der Funktionalität der Pinhole-Optik der Zerstreuungskreis in der Pinhole-Ebene, die chromatische Längsaberration, die Definitionshelligkeit in der Pinhole-Ebene und ihr Wert bei Nachfokussierung sowie die Variation der Brennweite über der Wellenlänge und der entsprechenden Linsenstellung betrachtet. Die dargestellten Linien zeigen die jeweiligen Größen bei Fokussierung für 390nm, 546nm und 750nm. Man erkennt, daß durch die Bewegung der vorderen und hinteren Linse der chromatische Längsfehler kompensiert werden kann und die zugehörige Definitionshelligkeit in der Pinhole-Ebene ihren bestmöglichen, nachfokussierten Wert erreicht. Die Brennweite bleibt dabei weitgehend konstant. Der Farblängsfehler $CHL(\lambda, z_1)$ der Pinhole-Optik läßt sich insbesondere in Bezug auf $\lambda_0 = 546$nm durch folgenden Ausdruck annähern:

$$CHL(\lambda, z_1) = \sum_k c_k(z_1)\lambda^k \qquad\qquad (1)$$

mit

$$c_k(z_1) = q_k + r_k z_1 + s_k z_1^2$$

Dabei stellt die Koordinate $z_1$ die Distanz3 zwischen Vorder- und Mittellinse dar, die hier zur Charakterisierung der Pinhole-Optik benutzt wird. Alternativ können die Luftabstände Distanz5 oder Distanz7, die nachfolgend als $z_2$ bzw. $z_3$ bezeichnet werden, über die Verknüpfungen

$$z_1 = 20{,}5\text{mm} - z_2$$

$$z_1 = z_3 - 142{,}6\text{mm}$$

Verwendung finden.
Zur Kompensation des Farblängsfehlers der Objektive wird folgender Algorithmus vorgeschlagen:
Man rechne den Farblängsfehler $\Delta z(\lambda)$ der Objektive unter Verwendung des Abbildungsbildungsmaßstabes $\beta$ in die Pinholeebene

$$\Delta z'(\lambda) = \beta^2 \overline{\Delta z(\lambda)}.$$

Dieser Farblängsfehler soll durch Nachfokussieren der Pinhole-Optik für die Wellenlänge $\lambda$ kompensiert werden, d.h.

$$\overline{\Delta z'} + CHL(\lambda, z_1) = 0.$$

Daraus resultieren Lösungen für $z_1$, die eine geeignete Einstellung der beweglichen Pinhole-Optik charakterisieren.
Eine Abschätzung für die Voreinstellung der obigen Pinhole-Optik, charakterisiert durch den Luftabstand $z_1$ zwischen Vorder- und Mittellinse, kann wie folgt geschehen:

$$z_1 = 0.16 \cdot CHL_0(\lambda) + 10.5\text{mm},$$

wenn $CHL_0(\lambda)$ den Farblängsfehler des Objektivs bei idealer Abbildung in die Pinhole-Ebene bezeichnet. Darüber hinaus gilt:

$$z_2 = 20{,}5\text{mm} - z_1$$

$$z_3 = z_1 + 142{,}6\text{mm}$$

Da die Pinhole-Optik über einen freien Bewegungsbereich $\Delta z_1$ von 21mm verfügt, lassen sich mit dieser Anordnung Farblängsfehler der Objektive von bis zu 130mm in der Pinhole-Ebene kompensieren.

**6. Ausführungsbeispiel für Brennweite f'=22 (Kollimator-Optik)**

Die Kollimator-Optik hat die Aufgabe, die Punktquelle am Faserausgang mit einer numerischen Apertur von etwa 0.07 in ein Parallelbündel mit Durchmesser 3.2mm im Unendlichraum vor dem Scan-Objektiv umzuwandeln. Dazu ist eine Optik mit der Brennweite 22mm erforderlich. Sie soll ferner eine teilweise Kompensation des Farblängfehlers der Objektive durch Drehen der Farbkurve realisieren. Die Abbildung von Unendlich in den Faserausgang kann wie folgt ausgeführt werden:

| lfdNr | Distanz [mm] | Radius [mm] | Glasart | f'Linse | $n_e$ | $\nu_\varepsilon$ | $\phi$ |
|---|---|---|---|---|---|---|---|
| 1 | Unendlich | 10.1 | N-FK5 | 16,4 | 1,48914 | 79,5 | 7,0 |
| 2 | 3,6 | -34.0 | | | | | |
| 3 | 1,7 | -11,2 | F2 | -11,6 | 1,62408 | 41,0 | 7,0 |
| 4 | 3,6 | 23.2 | | | | | |
| 5 | 3,7 | 7.3 | N-FK5 | 16,1 | 1,48914 | 79,5 | 7,0 |
| 6 | 3,6 | 81.7 | | | | | |
| 7 | 14,3 | Unendlich | | | | | |

Distanzen:

d2: Dicke Linse L1, d3: Abstand L1-L2, d4: Dicke L2, d5: Abstand L2-L3, d6: Dicke L3, d7: Abstand L3-Faserausgang

Dabei werden solche Einstellungen vorgenommen, daß bei fester Brennweite jeweils eine feste Wellenlänge - insbesondere $\lambda_0$= 546nm - fokussiert bleibt und eine weitere Wellenlänge einen definierten Farblängsfehler erhält, der zur Kompensation des Farblängsfehlers der Objektive dient. Das Drehen der Farbkurve bei fester Brennweite wird durch die Bewegung der Mittellinse gegenüber den beiden äußeren, fest verbundenen Linsen realisiert.

| Distanz3 [mm] | Distanz5 [mm] | Distanz7 [mm] | Ablage [mm] bei 390nm |
|---|---|---|---|
| 1.7 | 3.7 | 14.3 | 0.17 |
| 2.9 | 2.5 | 12.0 | 0.03 |
| 5.1 | 0.3 | 8.1 | -0.18 |

Abb. 4a zeigt den Stellbereich dieser Anordnung. Der zugehörigen Charakterisierung entnimmt man das Vermögen der Kollimatorgruppe, den Farblängsfehler um 0.35mm im UV-Bereich zu drehen.

Zur Beschreibung der Dynamik der Kollimatorbewegung sind 2 Größen erforderlich. Es sind dies der Luftabstand 7 der letzten Linse zum Faserausgang $z_3$ sowie der Luftabstand 5 der Mittellinse zur letzten Linse $z_2$. Die betrachtete Funktion setzt eine gekoppelte Bewegung $z_2(z_3)$ voraus, um eine Wellenlängen ($\lambda_0$= 546nm) zu fokussieren. Bei der oben gewählten Brechkraftverteilung gilt speziell:

$$z_2(z_3) = 0.55z_3 - 4.2\text{mm}$$

Der Farblängsfehler der Kollimator-Optik läßt sich dann als $CHL(z_3, \lambda)$ ausdrücken. Es gilt (1) mit veränderten Entwicklungskoeffizienten

$$c_k(z_3) = q_k + r_k z_3$$

Wir wollen nun solch eine Stellung $z_3$ finden, bei der der Farblängsfehler zwischen den Wellenlängen $\lambda_1$ und $\lambda_2$ einen definierten Wert so annimmt, daß er zusammen mit dem der Objektive kompensiert wird.

$$CHL(z_3, \lambda_1) - CHL(z_3, \lambda_2) = -CHL_0(\lambda_1, \lambda_2)$$

Aus dieser Bedingung folgt eine Position $z_3$ der letzten Linse gegenüber der Faser sowie die zugehörige Position $z_2(z_3)$ der Mittellinse, sofern der entsprechende Bewegungsraum ausreicht. Eine Abschätzung für die Voreinstellung des Kollimators zur Drehung der Farbkurve derart, daß der durch das Objektiv verursachte Farblängsfehler $CHL_0(\lambda_2)$-$CHL_0(\lambda_1)$ in der Ebene der Fasereinkopplung zwischen den beiden Wellenlängen $\lambda_1$ und $\lambda_2$ durch den Kollimator bei gleicher Brennweite kompensiert wird, wird durch die Beziehungen

$$z_2 = 3.7\text{mm} - 0.24\mu\text{m} \cdot \frac{CHL_0(\lambda_2) - CHL_0(\lambda_1)}{\lambda_2 - \lambda_1}$$

$$z_3 = 1.8 z_2 + 7.5\text{mm}$$

$$z_1 = 5.4\text{mm} - z_2$$

gegeben.
Der Luftabstand 3 zwischen Vorder- und Mittellinse $z_1$ resultiert aus der gemeinsamen Verschiebung von Vorder- und Hinterlinse.
Das Verfahren zum Nachfokussieren und Drehen der Farblängskurve mit Hilfe der Pinhole-Optik sowie der Kollimator-Optik ist insbesondere dann vorteilhaft, wenn

a) Farblängsfehler der Objektive dominieren,
b) sich das System nachfokussieren läßt (kleine sphärische Aberrationen, gute Transmission) und
c) der Beitrag des Scanobjektives zum Farblängsfehler vernachlässigt werden kann.

**Patentansprüche**

1. Konfokales Laser-Scanning-Mikroskop mit mindestens einem Detektionsstrahlengang, in dem vor dem Detektor eine Lochblende angeordnet ist,

   - wobei zur Fokussierung unterschiedlicher Wellenlängen des delektierten Lichtes in die Lochblendenebene im Detektionsstrahlengang eine Pinholeoptik (4b) mit variabler Übertragungslänge und fester Brennweite vorgesehen ist, die eine Abbildung aus dem Unendlichraum in eine Bildebene mit endlicher Schnittweite realisiert,
   - **dadurch gekennzeichnet, daß**
   - die Pinholeoptik (4b) aus mindestens drei Gruppen (L1, L2, L3) besteht, von denen die - im Detektionsstrahlengang in Richtung der Lochblende gesehen - erste Gruppe (L1) eine positive Brechkraft, die zweite Gruppe (L2) eine negative Brechkraft und die dritte Gruppe (L3) eine positive Brechkraft aufweist, und
   - zur Änderung der Übertragungslänge die erste und dritte Gruppe (L1, L3) gemeinsam fest verbunden bewegt werden und die zweite Gruppe (L2) fest steht.

2. Konfokales Laser-Scanning Mikroskop nach Anspruch 1, **dadurch gekennzeichnet, daß** bei der Pinholeoptik (4b) die maximale Schnittweitenänderung $\Delta S'_{max}$ bei etwa gleichen Brennweiten der ersten und dritten Gruppe durch die Beziehung

$$\Delta S'_{max} = \left| \frac{f_G L}{f_2} \right|$$

bestimmt ist, wobei $f_G$ die Gesamtbrennweite der Pinholeoptik (4b) der Baulänge $L=L_{12}+L_{23}$, mit $L_{12}$ dem Abstand zwischen erster und zweiter Linsengruppe (L1) bzw. (L2) und $L_{23}$ dem Abstand zwischen zweiter und dritter Linsengruppe (L2) bzw. (L3), und $f_2$ die Brennweite der zweiten Gruppe darstellen.

3. Konfokales Laser-Scanning-Mikroskop nach Anspruch 1 oder 2, wobei die Pinholeoptik (4b) die folgenden Abmessungen und Distanzen aufweist:

| lfd. Nr. | Distanz [mm] | Radius [mm] | Glasart | f' Linse | $n_e$ | $\nu_e$ | $\phi$ |
|---|---|---|---|---|---|---|---|
| 1 | $\infty$ | 29,0 | N-FK5 | 59,3 | 1,48914 | 70,18 | 9,0 |
| 2 | 3,0 | $\infty$ | | | | | |
| 3 | 10,7 | 43,4 | LF5 | -30,4 | 1,58482 | 40,56 | 7,0 |
| 4 | 3,5 | 12,2 | | | | | |
| 5 | 11,0 | -25,3 | N-SK2 | 62,1 | 1,60994 | 56,37 | 11,0 |
| 6 | 3,0 | -15,8 | | | | | |
| 7 | 153,3 | $\infty$ | | | | | |

4. Konfokales Laser-Scanning-Mikroskop nach Anspruch 3, mit folgender Bewegung der Komponenten der Pinholeoptik (4b):

| | Distanz [mm] | 3 Distanz [mm] | 5 Distanz [mm] | 7 |
|---|---|---|---|---|
| 1. | 8,3 | 13,4 | 150,9 | |
| 2. | 10,7 | 11,0 | 153,3 | |
| 3. | 9,1 | 12,6 | 151,7 | |

5. Konfokales Laser-Scanning-Mikroskop nach einem der vorgenannten Ansprüche, **dadurch gekennzeichnet, daß** der Farblängsfehler $CHL(\lambda, z_1)$ der Pinholeoptik (4b) durch folgenden Ausdruck angenähert wird:

$$CHL(\lambda, z_1) = \sum_k c_k(z_1)\lambda^k$$

mit

$$c_k(z_1) = q_k + r_k z_1 + s_k z_1^2$$

6. Konfokales Laser-Scanning-Mikroskop nach einem der vorgenannten Ansprüche, **dadurch gekennzeichnet, daß** die Kompensation des Farblängsfehlers der Objektive(1) durch folgendes Verfahren erfolgt:

- es wird der Farblängsfehler $\Delta z(\lambda)$ der Objektive (1) unter Verwendung des Abbildungsmaßstabs $\beta$ in die Pinholeebene $\Delta z'(\lambda)=\beta^2 \Delta zb(\lambda)$ berechnet;
- dieser Farblängsfehler soll durch Nachfokussieren der Pinholeoptik (4b) für die Wellenlänge $\lambda$ kompensiert werden, d.h. $\Delta z'+CHL(\lambda, z_1)=0$;
- daraus werden Lösungen für den Luftabstand $z_1$ zwischen erster und zweiter Linsengruppe (L1) bzw. (L2) berechnet, die eine Einstellung der beweglichen Pinholeoptik (4b) charakterisieren.

**7.** Konfokales Laser-Scanning-Mikroskop nach einem der vorgenannten Ansprüche, **dadurch gekennzeichnet, daß** eine Abschätzung für die Voreinstellung der Pinholeoptik (4b), charakterisiert durch den Luftabstand $z_1$ zwischen erster und zweiter Linsengruppe (L1) bzw. (L2), nach der Formel $z_1 = 0{,}16 \cdot CHL_0(\lambda) + 10{,}5mm$ erfolgt, wenn $CHL_0(\lambda)$ den Farblängsfehler des Obkjektivs (1) bei idealer Abbildung in die Pinholeebene bezeichnet.

**8.** Konfokales Laser-Scanning-Mikroskop nach einem der vorgenannten Ansprüche, **dadurch gekennzeichnet, daß** das Laser-Scanning-Mikroskop mehrere Detektionsstrahlengänge aufweist, wobei mindestens ein Detektionsstrahlengang an eine Schnittstelle im Mikroskop ansetzbar ist, die einen Unendlich-Strahlengang aufweist.

**9.** Konfokales Laser-Scanning-Mikroskop mit mindestens einer über Lichtleitfaser eingekoppelten Lichtquelle,

- wobei dem Faserausgang nachgeordnet eine Kollimatoroptik (5b) mit fester Brennweite und veränderlicher Schnittweite vorgesehen ist, die die Punktquelle am Faserausgang mit einer numerischen Apertur in ein Parallelbündel im Unendlichraum vor dem Scan-Objektiv (3) umwandelt,
- **dadurch gekennzeichnet, daß**
- die Kollimatoroptik (5b) aus mindestens drei Gruppen (L1, L2, L3) besteht, von denen die - vom Scan-Objektiv (3) aus in Richtung des Faserausgangs gesehen - erste Gruppe (L1) eine positive Brechkraft, die zweite Gruppe (L2) eine negative Brechkraft und die dritte Gruppe (L3) eine positive Brechkraft aufweist,
- wobei eine wellenlängenabhängige, zumindest teilweise Kompensation des Farblängsfehlers der Mikroobjektive über das Drehen der Farbkurve bei fester Brennweite für die verwendete Beleuchtungswellenlänge durch die Bewegung der mittleren Gruppe (L2) gegenüber den äußeren beiden, fest verbundenen Gruppen (L1, L3) und realisiert wird.

**10.** Konfokales Laser-Scanning-Mikroskop nach Anspruch 9, **dadurch gekennzeichnet, daß** die Kollimatoroptik (5b) die Punktquelle am Faserausgang mit einer numerischen Apertur von 0.07 in ein Parallelbündel mit Durchmesser 3.2mm im Unendlichraum vor dem Scan-Objektiv umwandelt.

**11.** Konfokales-Laser-Scanning-Mikroskop nach Anspruch 9 oder 10, **dadurch gekennzeichnet, daß** die Kollimatoroptik (5b) eine Brennweite von etwa 22mm aufweist.

**12.** Konfokales Laser-Scanning-Mikroskop nach einem der Ansprüche 9 bis 11, **dadurch gekennzeichnet, daß** die Kollimatoroptik (5b) folgende Abmessungen und Distanzen aufweist:

| lfd. Nr. | Distanz [mm] | Radius [mm] | Glasart | f' Linse | $n_e$ | $\nu_e$ | $\phi$ |
|---|---|---|---|---|---|---|---|
| 1 | ∞ | 10,1 | N-FK5 | 16,4 | 1,48914 | 79,5 | 7,0 |
| 2 | 3,6 | -34,0 | | | | | |
| 3 | 1,7 | -11,2 | F2 | -11,6 | 1,62408 | 41,0 | 7,0 |
| 4 | 3,6 | 23,2 | | | | | |
| 5 | 3,7 | 7,3 | N-FK5 | 16,1 | 1,48914 | 79,5 | 7,0 |
| 6 | 3,6 | 81,7 | | | | | |
| 7 | 14,3 | ∞ | | | | | |

**13.** Konfokales Laser-Scanning-Mikroskop nach einem der Ansprüche 9 bis 12, bei dem durch die Kollimatoroptik (5b) das Drehen der Farbkurve bei fester Brennweite durch die Bewegung der zweiten Linsengruppe (L2) gegenüber den beiden äußeren, fest verbundenen Linsengruppen (L1, L3), wie folgt realisiert wird:

| Distanz [mm] | 3 Distanz [mm] | 5 Distanz [mm] | 7 Ablage [mm] bei 390 mm |
|---|---|---|---|
| 1.7 | 3.7 | 14.3 | 0.17 |
| 2.9 | 2.5 | 12.0 | 0.03 |
| 5.1 | 0.3 | 8.1 | -0.18 |

14. Konfokales Laser-Scanning-Mikroskop nach einem der Ansprüche 9 bis 13, **dadurch gekennzeichnet, daß** bei der Kollimatoroptik (5b) eine gekoppelte Bewegung $z_2(z_3)$ der zweiten und dritten Linsengruppe (L2) und (L3) erfolgt um eine Wellenlänge zu fokussieren, wobei $z_2(z_3)$ = 0,55$z_3$ - 4,2mm ist, mit $z_2$ dem Luftabstand der zweiten Linsengruppe (L2) zur dritten Linsengruppe (L3) entgegen der Beleuchtungsrichtung, und mit $z_3$ dem Luftabstand der dritten Linsengruppe (L3) zum Faserausgang.

15. Konfokales Laser-Scanning-Mikroskop nach einem der Ansprüche 9 bis 14, **dadurch gekennzeichnet, daß** der durch das Objektiv verursachte Farblängsfehler $CHL_0(\lambda_2)$ - $CHL_0(\lambda_1)$ durch die Beziehungen

$$z_2 = 3,7mm - 0,24\mu m \cdot \frac{CHL_0(\lambda_2) - CHL_0(\lambda_1)}{\lambda_2 - \lambda_1} \quad ,$$

$$z_3 = 1,8z_2 + 7,5mm \ ,$$

$$z_1 = 5,4mm - z_2$$

abgeschätzt wird, so daß der Farblängsfehler in der Ebene der Fasereinkopplung zwischen den beiden Wellenlängen $\lambda_1$ und $\lambda_2$ durch die Kollimatoroptik (5b) bei gleicher Brennweite kompensiert wird.

**Claims**

1. Confocal laser scanning microscope having at least one detection beam path in which an apertured diaphragm is disposed upstream of the detector,

   - wherein in order to focus different wavelengths of the detected light into the apertured diaphragm plane a pinhole optical system (4b) is provided in the detection beam path, said pinhole optical system having a variable transmission length and fixed focal length and effecting imaging from infinity into an image plane having a finite back focus distance,
   - **characterised in that**
   - the pinhole optical system (4b) consists of at least three groups (L1, L2, L3) of which the first group (L1) - as seen in the detection beam path in the direction of the apertured diaphragm - has a positive refractive power, the second group (L2) has a negative refractive power and the third group (L3) has a positive refractive power, and
   - in order to change the transmission length, the first and third groups (L 1, L3) are moved together in a fixedly connected manner and the second group (L2) is stationary.

2. Confocal laser scanning microscope as claimed in Claim 1, **characterised in that** in the pinhole optical system (4b) the maximum back focus distance variation $\Delta S'_{max}$ when the focal lengths of the first and third groups are approximately identical is determined by the equation:

$$\Delta S'_{max} = \left| \frac{f_G L}{f_2} \right|$$

wherein $f_G$ is the overall focal length of the pinhole optical system (4b) having the installation length L = $L_{12}$ + $L_{23}$, where $L_{12}$ is the distance between the first and second lens group (L1) and (L2) respectively and $L_{23}$ is the distance between the second and third lens group (L2) and (L3) respectively, and $f_2$ is the focal length of the second group.

3. Confocal laser scanning microscope as claimed in Claim 1 or 2, wherein the pinhole optical system (4b) has the following dimensions and distances:

| Sequential no. | Distance [mm] | Radius [mm] | Glass type | f' lens | $n_e$ | $\upsilon_e$ | $\phi$ |
|---|---|---|---|---|---|---|---|
| 1 | $\infty$ | 29.0 | N-FK5 | 59.3 | 1.48914 | 70.18 | 9.0 |
| 2 | 3.0 | $\infty$ | | | | | |
| 3 | 10.7 | 43.4 | LF5 | -30.4 | 1.58482 | 40.56 | 7.0 |
| 4 | 3.5 | 12.2 | | | | | |
| 5 | 11.0 | -25.3 | N-SK2 | 62.1 | 1.60994 | 56.37 | 11.0 |
| 6 | 3.0 | -15.8 | | | | | |
| 7 | 153.3 | $\infty$ | | | | | |

**4.** Confocal laser scanning microscope as claimed in Claim 3, having the following movement of the components of the pinhole optical system (4b):

| | Distance 3 [mm] | Distance 5 [mm] | Distance 7 [mm] |
|---|---|---|---|
| 1. | 8.3 | 13.4 | 150.9 |
| 2. | 10.7 | 11.0 | 153.3 |
| 3. | 9.1 | 12.6 | 151.7 |

**5.** Confocal laser scanning microscope as claimed in any one of the preceding Claims, **characterised in that** the longitudinal colour aberration $CHL(\lambda, z_1)$ of the pinhole optical system (4b) is approximated by the following expression:

$$CHL(\lambda, z_1) = \sum_k c_k(z_1)\lambda^k$$

where

$$c_k(z_1) = q_k + r_k z_1 + s_k z_1^2.$$

**6.** Confocal laser scanning microscope as claimed in any one of the preceding Claims, **characterised in that** the longitudinal colour aberration of the objectives (1) is compensated for by the following method:

- the longitudinal colour aberration $\Delta z(\lambda)$ of the objective (1) is calculated using the linear magnification $\beta$ in the pinhole plane $\Delta z'(\lambda) = \beta^2 \Delta z(\lambda)$;
- this longitudinal colour aberration is to be compensated for by refocusing the pinhole optical system (4b) for the wavelength $\lambda$, i.e., $\Delta z' + CHL (\lambda, z_1) = 0$;
- from that, solutions for the clearance $z_1$ between the first and second lens group (L1) and (L2) respectively are calculated and characterise an adjustment of the movable pinhole optical system (4b).

**7.** Confocal laser scanning microscope as claimed in any one of the preceding Claims, **characterised in that** the pre-adjustment of the pinhole optical system (4b), **characterised by** the clearance $z_1$ between the first and second lens group (L1) and (L2) respectively, is estimated by the formula $z_1 = 0.16 \cdot CHL_0(\lambda) + 10.5$ mm, when $CHL_0(\lambda)$ represents the longitudinal colour aberration of the objective (1) in the case of ideal imaging in the pinhole plane.

**8.** Confocal laser scanning microscope as claimed in any one of the preceding Claims, **characterised in that** the laser scanning microscope comprises several detection beam paths, wherein at least one detection beam path can be located at a point of intersection in the microscope, which point of intersection comprises an infinity beam path.

9. Confocal laser scanning microscope having at least one light source coupled-in via light-conducting fibres,

   - wherein a collimator optical system (5b) having a fixed focal length and a variable back focus distance is provided downstream of the fibre output and converts the point source at the fibre output with a numerical aperture into a parallel bundle in infinity upstream of the scanning objective (3),
   - **characterised in that**
   - the collimator optical system (5b) consists of at least three groups (L1, L2, L3) of which the first group (L1) - as seen from the scanning objective (3) in the direction of the fibre output - has a positive refractive power, the second group (L2) has a negative refractive power and the third group (L3) has a positive refractive power,
   - wherein a wavelength-dependent, at least partial, compensation of the longitudinal colour aberration of the micro-objectives and is achieved [*sic*] via the rotation of the colour curve in the case of a fixed focal length for the used illumination wavelength by moving the central group (L2) with respect to the two outer, fixedly connected, groups (L1, L3).

10. Confocal laser scanning microscope as claimed in Claim 9, **characterised in that** the collimator optical system (5b) converts the point source at the fibre output with a numerical aperture of 0.07 into a parallel bundle having a diameter of 3.2 mm in infinity upstream of the scanning objective.

11. Confocal laser scanning microscope as claimed in Claim 9 or 10, **characterised in that** the collimator optical system (5b) has a focal length of approximately 22 mm.

12. Confocal laser scanning microscope as claimed in any one of Claims 9 to 11, **characterised in that** the collimator optical system (5b) has the following dimensions and distances:

| Sequential no. | Distance [mm] | Radius [mm] | Glass type | f' lens | $n_e$ | $\nu_e$ | $\phi$ |
|---|---|---|---|---|---|---|---|
| 1 | $\infty$ | 10.1 | N-FK5 | 16.4 | 1.48914 | 79.5 | 7.0 |
| 2 | 3.6 | -34.0 | | | | | |
| 3 | 1.7 | -11.2 | F2 | -11.6 | 1.62408 | 41.0 | 7.0 |
| 4 | 3.6 | 23.2 | | | | | |
| 5 | 3.7 | 7.3 | N-FK5 | 16.1 | 1.48914 | 79.5 | 7.0 |
| 6 | 3.6 | 81.7 | | | | | |
| 7 | 14.3 | $\infty$ | | | | | |

13. Confocal laser scanning microscope as claimed in any one of Claims 9 to 12, wherein by way of the collimator optical system (5b), the rotation of the colour curve in the case of a fixed focal length is achieved by moving the second lens group (L2) with respect to the two outer, fixedly connected, lens groups (L1, L3) as follows:

| Distance 3 [mm] | Distance 5 [mm] | Distance 7 [mm] | Amount of deviation [mm] at 390 nm |
|---|---|---|---|
| 1.7 | 3.7 | 14.3 | 0.17 |
| 2.9 | 2.5 | 12.0 | 0.03 |
| 5.1 | 0.3 | 8.1 | -0.18 |

14. Confocal laser scanning microscope as claimed in any one of Claims 9 to 13, **characterised in that** in the collimator optical system (5b), coupled movement $z_2(z_3)$ of the second and third lens groups (L2) and (L3) is effected in order to focus a wavelength, wherein $z_2(z_3) = 0.55z_3 - 4.2$ mm, where $z_2$ is the clearance between the second lens group (L2) and the third lens group (L3) in the direction opposite the direction of illumination, and $z_3$ is the clearance between the third lens group (L3) and the fibre output.

15. Confocal laser scanning microscope as claimed in any one of Claims 9 to 14, **characterised in that** the longitudinal colour aberration $CHL_0(\lambda_2) - CHL_0(\lambda_1)$, caused by the objective, is estimated by the equations:

$$z_2 = 3.7mm - 0.24\mu m \cdot \frac{CHL_0(\lambda_2) - CHL_0(\lambda_1)}{\lambda_2 - \lambda_1},$$

$$z_3 = 1.8z_2 + 7.5mm,$$

$$z_1 = 5.4mm - z_2,$$

so that the longitudinal colour aberration in the plane of the fibre input-coupling between the two wavelengths $\lambda_1$ and $\lambda_2$ is compensated for by the collimator optical system (5b) at an identical focal length.

**Revendications**

1. Microscope à balayage laser à foyer commun comprenant au moins une trajectoire de faisceau de détection, dans lequel un diaphragme à trou est disposé devant le détecteur

   - une optique à trou d'épingle (4b) avec une longueur de transmission variable et une focale fixe étant prévue pour la focalisation de différentes longueurs d'onde de la lumière détectée dans le plan du diaphragme à trou, qui réalise une reproduction de l'espace infini dans un plan d'image avec une focale frontale infinie,

   **caractérisé en ce que**

   - l'optique à trou d'épingle (4b) comprend au moins trois groupes (L1, L2, L3), parmi lesquels le premier groupe (L1), vu dans la trajectoire du faisceau de détection en direction du diaphragme à trou, présente une réfringence positive, le second groupe (L2) une réfringence négative et le troisième groupe (L3) une réfringence positive, et
   - le premier et le troisième groupe (L1, L3) étant déplacés conjointement reliés de façon fixe pour la modification de la longueur de transmission et le second groupe (L2) étant fixe.

2. Microscope à balayage laser à foyer commun selon la revendication 1, **caractérisé en ce que**, sur l'optique à trou d'épingle (4b), la modification maximale de la focale frontale $\Delta S'_{max}$ pour des focales à peu près identiques du premier et du troisième groupe est déterminée par la relation suivante :

$$\Delta S'_{max} = \left| \frac{f_G L}{f2} \right|$$

   $f_G$ représentant la focale globale de l'optique à trou d'épingle (4b) de longueur de construction $L = L_{12} + L_{23}$, avec $L_{12}$ la distance entre le premier et le second groupe de lentilles (L1) et/ou (L2) et $L_{23}$ la distance entre le second et le troisième groupe de lentilles (L2) et (L3) et $f_2$ la focale du second groupe.

3. Microscope à balayage laser à foyer commun selon la revendication 1 ou 2, l'optique à trou d'épingle (4b) présentant les dimensions et distances suivantes :

| Numéro d'ordre | Distance [mm] | Rayon [mm] | Type de verre | f' lentille | ne | $v_e$ | $\phi$ |
|---|---|---|---|---|---|---|---|
| 1 | $\infty$ | 29,0 | N-FKS | 59,3 | 1,48914 | 70,18 | 9,0 |
| 2 | 3,0 | $\infty$ | | | | | |
| 3 | 10,7 | 43,4 | LFS | -30,4 | 1,58482 | 40,56 | 7,0 |
| 4 | 3,5 | 12,2 | | | | | |
| 5 | 11,0 | -25,3 | N-SK2 | 62,1 | 1,60994 | 56,37 | 11,0 |

(suite)

| Numéro d'ordre | Distance [mm] | Rayon [mm] | Type de verre | f' lentille | ne | $v_e$ | $\phi$ |
|---|---|---|---|---|---|---|---|
| 6 | 3,0 | -15,8 | | | | | |
| 7 | 153,3 | $\infty$ | | | | | |

4. Microscope à balayage laser à foyer commun selon la revendication 3, avec le déplacement suivant des composants de l'optique à trou d'épingle (4b) :

| | Distance [mm] | 3 Distance [mm] | 5 distance [mm] | 7 |
|---|---|---|---|---|
| 1. | 8,3 | 13,4 | 150,9 | |
| 2. | 10,7 | 11,0 | 153,3 | |
| 3. | 9,1 | 12,6 | 151,7 | |

5. Microscope à balayage laser à foyer commun selon l'une quelconque des revendications précédentes, **caractérisé en ce que** l'aberration chromatique longitudinale CHL($\lambda$, $z_1$) de l'optique à trou d'épingle (4b) est approchée par l'expression suivante :

$$CHL(\lambda, z_1) = \sum_k C_k(z_1) \lambda^k$$

avec

$$C_k(z_1) = q_k + r_k z_1 + s_k z^2_1$$

6. Microscope à balayage laser à foyer commun selon l'une quelconque des revendications précédentes, **caractérisé en ce que** la compensation de l'aberration chromatique longitudinale des objectifs (1) s'effectue selon le procédé suivant :

   - l'aberration chromatique longitudinale $\Delta z(\lambda)$ des objectifs (1) est calculée en utilisant l'échelle de reproduction $\beta$ dans le plan de trou d'épingle $\Delta z'(\lambda) = \beta^2 \Delta z(\lambda)$ ;
   - cette aberration chromatique longitudinale doit être compensée par une nouvelle focalisation de l'optique à trou d'épingle (4b) pour la longueur $\lambda$, c'est-à-dire $\Delta z' + CHL(\lambda, z_1) = 0$ ;
   - à partir de là, on calcule des solutions pour l'espace d'air $z_1$ entre le premier et le second groupe de lentilles (L1) et (L2), qui caractérisent un réglage de l'optique à trou d'épingle (4b) mobile.

7. Microscope à balayage laser à foyer commun selon l'une quelconque des revendications précédentes, **caractérisé en ce qu'**une évaluation pour le préréglage de l'optique à trou d'épingle (4b), **caractérisé par** l'espace d'air $z_1$ entre le premier et le second groupe de lentilles (L1) et (L2) s'effectue selon la formule $z_1 = 0{,}16 \cdot CHL_o(\lambda) + 10{,}5$ mm, lorsque $CHL_o(\lambda)$ désigne l'aberration chromatique longitudinale de l'objectif (1) avec une représentation idéale dans le plan à trou d'épingle.

8. Microscope à balayage laser à foyer commun selon l'une quelconque des revendications précédentes, **caractérisé en ce que** le microscope à balayage laser présente plusieurs trajectoires de faisceau de détection, au moins une trajectoire de faisceau de détection pouvant être placée sur une interface dans le microscope, laquelle présente une trajectoire de faisceau infinie.

9. Microscope à balayage laser à foyer commun comprenant au moins une source lumineuse injectée par fibre optique,

   - une optique à collimateur (5b) avec focale fixe et focale frontale variable étant prévue en aval de la sortie de fibres, laquelle optique convertit la source ponctuelle à la sortie des fibres avec une ouverture numérique en un faisceau parallèle dans l'espace infini devant l'objectif de balayage (3),

- **caractérisé en ce que**

- l'optique à collimateur (5b) comprend au moins trois groupes (L1, L2, L3), dont le premier groupe (L1), vu depuis l'objectif de balayage (3) en direction de la sortie de fibres, présente une réfringence positive, le second groupe (L2) une réfringence négative et le troisième groupe (L3) une réfringence positive,

- une compensation, dépendante de la longueur d'onde et au moins partielle de l'aberration chromatique longitudinale des micro-objectifs étant réalisée par la rotation de la courbe de couleur avec une focale fixe pour la longueur d'onde d'éclairage utilisée par le déplacement du groupe central (L2) par rapport aux deux groupes (L1, L3) extérieurs reliés de façon fixe.

**10.** Microscope à balayage laser à foyer commun selon la revendication 9,
**caractérisé en ce que** l'optique à collimateur (5b) convertit la source ponctuelle de la sortie de fibre avec une ouverture numérique de 0,07 en un faisceau parallèle de diamètre 3,2 mm dans l'espace infini devant l'objectif de balayage.

**11.** Microscope à balayage laser à foyer commun selon la revendication 9 ou 10, **caractérisé en ce que** l'optique à collimateur (5b) présente une focale d'environ 22 mm.

**12.** Microscope à balayage laser à foyer commun selon l'une quelconque des revendications 9 à 11, **caractérisé en ce que** l'optique du collimateur (5b) présente les dimensions et distances suivantes :

| Numéro d'ordre | Distance [mm] | Rayon [mm] | Type de verre | f' lentille | $n_e$ | $v_e$ | $\phi$ |
|---|---|---|---|---|---|---|---|
| 1 | $\infty$ | 10,1 | N-FKS | 16,4 | 1,48914 | 79,5 | 7,0 |
| 2 | 3,6 | -34,0 | | | | | |
| 3 | 1,7 | -11,2 | F2 | -11,6 | 1,62408 | 41,0 | 7,0 |
| 4 | 3,6 | 23,2 | | | | | |
| 5 | 3,7 | 7,3 | N-FKS | 16,1 | 1,48914 | 79,5 | 7,0 |
| 6 | 3,6 | 81,7 | | | | | |
| 7 | 14,3 | $\infty$ | | | | | |

**13.** Microscope à balayage laser à foyer commun selon l'une quelconque des revendications 9 à 12, sur lequel la rotation de la courbe de couleur avec une focale fixe est réalisée par l'optique à collimateur (5b) par le déplacement du second groupe de lentilles (L2) par rapport aux deux groupes de lentilles (L1, L3) extérieurs, reliés de façon fixe, de la façon suivante :

| Distance [mm] | 3 Distance [mm] | 5 Distance [mm] | 7 déviation [mm] pour 390 nm |
|---|---|---|---|
| 1,7 | 3,7 | 14,3 | 0,17 |
| 2,9 | 2,5 | 12,0 | 0,03 |
| 5,1 | 0,3 | 8,1 | -0,18 |

**14.** Microscope à balayage laser à foyer commun selon l'une quelconque des revendications 9 à 13, **caractérisé en ce que**, avec l'optique à collimateur (5b), on a un déplacement $z_2(z_3)$ couplé du second et du troisième groupe de lentilles (L2) et (L3) afin de focaliser une longueur d'onde, $z_2$ ($z_3$) étant égal à $0,55 z_3 - 4,2$ mm, avec $z_2$ l'espace d'air entre le second groupe de lentilles (L2) et le troisième groupe de lentilles (L3) dans le sens contraire au sens d'éclairage, et avec $z_3$ l'espace d'air entre le troisième groupe de lentilles (L3) et la sortie de fibres.

**15.** Microscope à balayage laser à foyer commun selon l'une quelconque des revendications 9 à 14, **caractérisé en ce que** l'aberration chromatique longitudinale $CHL_0 (\lambda_2)$ - $CHL_0 (\lambda_1)$ causée par le l'objectif est évaluée par les relations suivantes.

$$z_2 = 3,7mm - 0,24mm \cdot \frac{CHL_0(\lambda_2) - CHL0(\lambda_1)}{\lambda_2 - \lambda_1}$$

$$z_3 = 1,8z_2 + 7,5mm \cdot$$

$$z_1 = 5,4mm - z_2$$

de sorte que l'aberration chromatique longitudinale dans le plan de l'injection de fibres entre les deux longueurs d'onde $\lambda_1$ et $\lambda_2$ est compensée par l'optique à collimateur (5b) pour une focale identique.

Abb.1

Abb.2

750 nm

546 nm

390 nm

Abb.3a

1

2

3

Abb.4a

## Zerstreuungskreis in mm

Wellenlängen 33.333333/cm

## Definitionshelligkeit

Wellenlängen 30.000000/cm

Fig.3b(Teil1)

Farblängsfehler in mm

Wellenlängen 30.000000/cm

Brennweite in mm

Wellenlängen 30.000000/cm

Fig.3b(Teil2)

## Zerstreuungskreis in mm

Wellenlängen 25.000000/cm

## DEH

Wellenlängen 25.000000/cm

Fig.4b(Teil1)

## Farblängsfehler in mm

Ordinate 0.200000/cm

Wellenlängen 25.000000/cm

## Brennweite in mm

Ordinate 10.000000/cm

Wellenlängen 25.000000/cm

Fig.4b(Teil2)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19702753 A1
- DE 19654211 A1
- DE 19901219 A1

**In der Beschreibung aufgeführte Nicht-Patentliteratur**

- **WILSON.** Confocal Microscopy. Academy Press